# FASCICULE DE BREVET EUROPEEN

(11) **EP 3 875 266 B1**
(45) Date de publication et mention de la délivrance du brevet: **23.07.2025**
(21) Numéro de dépôt: 21160931.8
(22) Date de dépôt: 05.03.2021
(51) Int. Cl.: B32B 7/12, B32B 27/08, B32B 27/18, B32B 27/28, B32B 27/30, B32B 27/32, B32B 27/40

(54) **FILM BICOUCHE POUR LA PROTECTION D'UN ÉCRAN ET SON PROCÉDÉ DE FABRICATION**
ZWEISCHICHTFILM FÜR BILDSCHIRMSCHUTZ UND SEIN HERSTELLUNGSVERFAHREN
BILAYER FILM FOR SCREEN PROTECTION AND HIS MANUFACTURING PROCESS

(30) Priorité: 05.03.2020 FR 2002239
(43) Date de publication de la demande: 08.09.2021
(73) Titulaire: PROTECTECRAN, 76000 Rouen (FR)
(72) Inventeur: MAILLET, Olivier, 76230 Bois-Guillaume (FR)
(74) Mandataire: Cabinet Chaillot

(56) Documents cités:
- WO-A1-2017/035284
- WO-A1-2017/160479
- US-A1- 2005 249 946

## Description

La présente invention concerne un film bicouche pour la protection d'un écran, tactile ou non tactile, ainsi qu'un procédé de fabrication de ce film bicouche.

Les écrans à protéger sont notamment les écrans de téléphones portables, les écrans de matériels médicaux, les écrans servant à piloter des procédés dans l'artisanat et/ou l'industrie, les bornes automatiques, et, d'une manière générale, tous les écrans se trouvant dans tous les moyens de transport, tels que les voitures, les motos, l'aéronautique.

Pour protéger les écrans de téléphones portables, on utilise de façon classique une couche de polyéthylène dont la face destinée à venir en contact avec l'écran est revêtue d'un adhésif facilement repositionnable sans laisser de traces.

Toutefois, un tel film monocouche ne permet pas de protéger l'écran contre les chocs et/ou contre les bactéries.

On connaît par ailleurs des films antibactériens en poly(chlorure de vinyle) qui sont utilisés par exemple pour être collés sur des barres de transport en commun. De tels films ne peuvent être posés que sous presse, avec des risques d'endommager le support à la pose. Par ailleurs, des traces de colle subsistent si l'on retire le film.

On connaît par la demande WO 2010/060094 A1 des films antimicrobiens composés d'un film antibactérien et d'une couche optionnelle adhésive. Composés d'une seule couche, ils ne permettent pas de cumuler rigidité et absorption des chocs.

La demande de brevet américain 2010/0190004 A1 propose une combinaison d'un film antibactérien avec un film en polyester, mais ne propose pas d'utiliser en face externe une couche souple pour absorber les chocs et éventuellement développer des caractéristiques auto-cicatrisantes. Egalement, la demande de brevet US 2013/0209718 A1 propose des films de protection d'écrans en poly(téréphtalate d'éthylène) aux propriétés antimicrobiennes. Ces films « monocouche » ne combinent pas les caractéristiques de deux films, l'un rigide et l'autre souple.

Enfin, la demande de brevet FR 2912417 A1 propose des films souples (monocouches) aux propriétés antimicrobiennes. Ces films ne peuvent être utilisés facilement par un utilisateur car ils manquent de rigidité et ils ne sont pas repositionnables.

La demande PCT WO2017/160479 A1 décrit un film bicouche pour la protection d'un écrant tactile qui comporte une première couche qui est apte à venir s'appliquer sur l'écran à protéger en position d'utilisation et dont la face interne est revêtue d'un adhésif permettant de coller le film bicouche sur ledit écran ; et une seconde couche qui est apte à venir s'appliquer sur la face externe de la couche interne par l'intermédiaire d'un adhésif et dont la face externe est destinée à être tournée vers l'utilisateur dudit écran en position d'utilisation. La première couche est une couche faite en verre. La seconde couche est une couche faite en poly(téréphtalate d'éthylène), en polycarbonate ou en acrylique. La seconde couche comprend au moins deux couches de film souple stratifiées l'une sur l'autre par l'intermédiaire d'un adhésif intermédiaire.

La présente invention vise à proposer un film protecteur pour écran, simple à poser et résistant aux chocs avec avantageusement des propriétés anti-microbiennes.

La présente invention a donc d'abord pour objet un film bicouche pour la protection d'un écran, comportant :
- une première couche, dite « couche interne », qui est apte à venir s'appliquer sur l'écran à protéger en position d'utilisation et dont la face interne est revêtue d'un adhésif permettant de coller le film bicouche sur ledit écran ; et
- une seconde couche, dite « couche externe », qui est apte à venir s'appliquer sur la face externe de la couche interne par l'intermédiaire d'un adhésif permanent et dont la face externe est destinée à être tournée vers l'utilisateur dudit écran en position d'utilisation,
caractérisé par le fait que :
- la couche interne est une couche dure, protectrice d'écran, faite de polyéthylène ; et
- la couche externe est une couche souple, absorbant les chocs, le cas échéant anti-rayures, faite d'une matière choisie parmi le poly(chlorure de vinyle) et le polyuréthane,
l'adhésif revêtant la couche interne pouvant être protégé avant emploi par une feuille anti-adhésive pelable, et la face externe de la couche externe pouvant être protégée avant emploi par une feuille protectrice pelable. Avantageusement, la couche interne, l'adhésif revêtant la couche interne, la couche externe et l'adhésif permanent reliant la couche interne et la couche externe sont transparents.

La couche interne de polyéthylène a notamment une épaisseur de 50 à 150 µm.

La couche interne de polyéthylène présente notamment :
- une transparence de 50 - 100 %, en particulier de 80 %, à la température ambiante selon la norme ISO 13468 ; et
- un voile de 0 - 5 %, en particulier de 1,4 %, selon la norme ISO 13468.

L'adhésif revêtant la couche interne peut être un adhésif permettant le décollement du film bicouche une fois posé sur un écran, puis un repositionnement dudit film bicouche, ledit adhésif repositionnable étant notamment un adhésif silicone à effet mouillant.

La couche externe a notamment une épaisseur de 50 à 200 µm. La couche externe peut être faite de poly(chlorure de vinyle) (PVC) ou de polyuréthane présentant notamment au moins l'un parmi :
- une résistance à la traction, exprimée en N/25 mm, au moins égale à 10, selon la norme NF EN 14410 ;
- un allongement à la rupture de 100% à 500%, selon la norme NF EN 14410 ;
- un retrait après 160 heures à 70°C de 0 à 1 mm, calculé sur un échantillon de film de 10cm x 10cm.

Par ailleurs, la couche externe peut contenir au moins un agent anti-microbien à raison notamment de 0,001 à 1 % en poids, ledit ou lesdits agents anti-microbiens étant notamment choisis parmi les particules d'argent, d'or, de cuivre ou de zinc, les sels d'argent, d'or, de cuivre ou de zinc, les molécules chimiques antiseptiques ou antibiotiques et les agents naturels anti-infectieux. L'adhésif permanent qui relie la couche interne et la couche externe peut être un adhésif permanent acrylique à base solvant, ayant notamment une épaisseur de 5 à 20 µm. L'invention porte également sur un procédé de fabrication du film bicouche tel que défini ci-dessus, caractérisé par le fait que l'on effectue une co-lamination par exemple, à une température de 20 à 50°C, telle que de 40°C, de la couche interne et de la couche externe revêtue de l'adhésif devant assurer la liaison entre la couche interne et la couche externe.

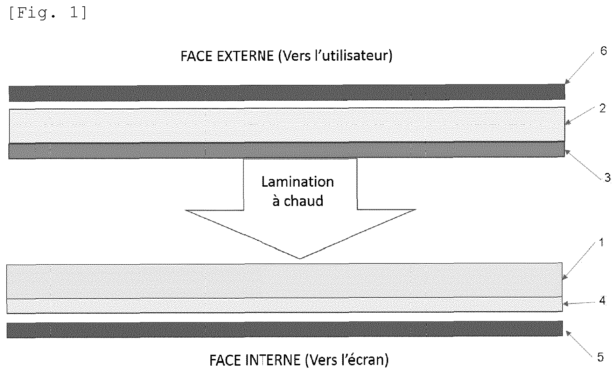

La Figure [Fig. 1] unique du dessin annexé illustre un procédé de fabrication par lamination à chaud du film bicouche selon la présente invention, procédé suivant lequel on effectue une co-lamination, par exemple à une température de 20°C à 50°C, telle que 40°C, à l'aide d'une plastifieuse en continu d'une première couche 1, dite « couche interne » et d'une seconde couche 2 dite « couche externe », revêtue sur sa face interne destinée à venir s'appliquer sur la première couche 1, d'une couche d'un adhésif permanent 3.

La couche interne 1 présente sur sa face externe une couche d'adhésif repositionnable 4.

Une feuille anti-adhésive 5 est disposée contre la couche d'adhésif repositionnable 4, et une feuille protectrice 6 est disposée contre la face externe de la couche externe 2, ces deux feuilles 5 et 6 permettant de protéger le film bicouche avant la pose.

Pour la pose, on commence par retirer la feuille anti-adhésive 5 et on applique le film bicouche sur l'écran à protéger, puis on retire la feuille protectrice 6.

Les exemples suivants illustrent la présente invention sans toutefois en limiter la portée.

### Exemple 1 : Fabrication d'un film protecteur d'écran anti-microbien

Un film stratifié à propriétés anti-microbiennes a été réalisé en utilisant comme film externe le film PVC anti-microbien Purzon060B de la Société Hexis et comme film interne le film PE ref Superclear4C de la Société MyscreenProtector. La co-lamination a été réalisée avec une plastifieuse Excelam Q 1100 RS à la vitesse de 3m/min et à 40 °C.

Le film stratifié résultant a été posé sur des écrans tactiles de systèmes de commande dans un fast food. L'efficacité antimicrobienne a été évaluée selon la norme ISO 22196. La diminution logarithmique obtenue a été la suivante :
- *Salmonella enterica subsp enterica >* 4,6
- *Listeria monocytogenes >* 4,2
- *Staphylococcus aureus >* 4,1
- *Escherichia coli* > 4,5
- *MRSA >* 3,5

### Exemple 2 : Fabrication d'un film protecteur d'écran, absorbant les chocs, anti-rayures

Un film stratifié à propriétés d'absorption des chocs et anti-rayures a été réalisé pour être posé sur des écrans tactiles de véhicules automobiles. A cet effet, on a utilisé, comme film externe, le film PU BODYFENCE de la Société Hexis et, comme film interne, le film PE ref Superclear4C de la Société MyscreenProtector. La co-lamination a été réalisée avec une plastifieuse Excelam Q 1100 RS à la vitesse de 3m/min et à 40 °C.

Les propriétés attendues ont été confirmées à l'utilisation.

Il est bien entendu que les modes de réalisation qui viennent d'être décrits ont été donnés à titre indicatif et non limitatif et que des modes de réalisation peuvent y être apportés sans que l'on s'écarte pour autant du cadre de la présente invention.

## Revendications

1. - Film bicouche pour la protection d'un écran tactile, comportant :
- une première couche (1), dite « couche interne », qui est apte à venir s'appliquer sur l'écran à protéger en position d'utilisation et dont la face interne est revêtue d'un adhésif (4) permettant de coller le film bicouche sur ledit écran ; et
- une seconde couche (2), dite « couche externe », qui est apte à venir s'appliquer sur la face externe de la couche interne par l'intermédiaire d'un adhésif permanent (3) et dont la face externe est destinée à être tournée vers l'utilisateur dudit écran en position d'utilisation,
**caractérisé par le fait que** :
- la couche interne (1) est une couche dure, protectrice d'écran, faite de polyéthylène ; et
- la couche externe (2) est une couche souple, absorbant les chocs et, le cas échéant anti-rayures, faite d'une matière choisie parmi le poly(chlorure de vinyle) et le polyuréthane,
l'adhésif (4) revêtant la couche interne pouvant être protégé avant emploi par une feuille anti-adhésive pelable, et la face externe de la couche externe pouvant être protégée avant emploi par une feuille protectrice pelable.

2. - Film bicouche selon la revendication 1, **caractérisé par le fait que** la couche interne (1), l'adhésif (4) revêtant la couche interne, la couche externe (2) et l'adhésif permanent (3) reliant la couche interne (1) et la couche externe (2) sont transparents.

3. - Film bicouche selon l'une des revendications 1 et 2, **caractérisé par le fait que** la couche interne (1) de polyéthylène a une épaisseur de 50 à 150 µm.

4. - Film bicouche selon l'une des revendications 2 et 3, **caractérisé par le fait que** la couche interne (1) de polyéthylène présente :
- une transparence de 50 - 100 %, en particulier de 80 %, à la température ambiante, selon la norme ISO 13468 ; et
- un voile de 0 - 5 %, en particulier de 1,4 %, selon la norme ISO 13468.

5. - Film bicouche selon l'une des revendications 1 à 4, **caractérisé par le fait que** l'adhésif (4) revêtant la couche interne est un adhésif permettant le décollement du film bicouche une fois posé sur un écran, puis un repositionnement dudit film bicouche, ledit adhésif repositionnable (4) étant notamment un adhésif silicone à effet mouillant.

6. - Film bicouche selon l'une des revendications 1 à 5, **caractérisé par le fait que** la couche externe (2) a une épaisseur de 50 à 200 µm.

7. - Film bicouche selon l'une des revendications 1 à 5, **caractérisé par le fait que** la couche externe (2) est faite de poly(chlorure de vinyle) (PVC) ou de polyuréthane présentant notamment au moins l'un parmi :
- une résistance à la traction, exprimée en N/25 mm, au moins égale à 10, selon la norme NF EN 14410 ;
- un allongement à la rupture de 100 % à 500 % , selon la norme NF EN 14410 ;
- un retrait après 160 heures à 70°C de 0 à 1 mm, calculé sur un échantillon de film de 10cm x 10cm.

8. - Film bicouche selon l'une quelconque des revendications 1 à 7, **caractérisé par le fait que** la couche externe (2) contient au moins un agent anti-microbien à raison notamment de 0,001 à 1 % en poids, ledit ou lesdits agents anti-microbiens étant notamment choisis parmi les particules d'argent, d'or, de cuivre ou de zinc, les sels d'argent, d'or, de cuivre ou de zinc, les molécules chimiques antiseptiques ou antibiotiques et les agents naturels anti-infectieux.

9. - Film bicouche selon l'une des revendications 1 à 8, **caractérisé par le fait que** l'adhésif permanent (3) qui relie la couche interne et la couche externe est un adhésif permanent acrylique à base solvant, ayant notamment une épaisseur de 5 à 20 µm.

10. - Procédé de fabrication du film bicouche tel que défini à l'une des revendications 1 à 9, **caractérisé par le fait que** l'on effectue une co-lamination de la couche interne (1) et de la couche externe (2) revêtue de l'adhésif (3) devant assurer la liaison entre la couche interne (1) et la couche externe (2).

## Patentansprüche

1. - Zweischichtige Folie zum Schutz eines Touchscreens, bestehend aus :
- eine erste Schicht (1), die sogenannte "innere Schicht", die geeignet ist, in der Gebrauchsstellung auf den zu schützenden Bildschirm aufgebracht zu werden, und deren Innenseite mit einem Klebstoff (4) beschichtet ist, der es ermöglicht, die zweischichtige Folie auf den Bildschirm zu kleben; und
- eine zweite Schicht (2), die sogenannte "äußere Schicht", die geeignet ist, über einen permanenten Klebstoff (3) auf die Außenseite der inneren Schicht aufgebracht zu werden, und deren Außenseite dazu bestimmt ist, dem Benutzer des genannten Bildschirms in der Benutzungsposition zugewandt zu sein,
**gekennzeichnet durch** :
- die innere Schicht (1) eine harte Schutzschicht aus Polyethylen für den Bildschirm ist; und
- die äußere Schicht (2) ist eine weiche, stoßdämpfende und gegebenenfalls kratzfeste Schicht aus einem Material, das aus Polyvinylchlorid und Polyurethan ausgewählt ist,
wobei der Klebstoff (4), der die innere Schicht beschichtet, vor Gebrauch durch eine abziehbare Trennfolie geschützt werden kann, und die Außenseite der äußeren Schicht vor Gebrauch durch eine abziehbare Schutzfolie geschützt werden kann.

2. - Zweischichtfolie nach Anspruch 1, **dadurch gekennzeichnet, dass** die innere Schicht (1), der Klebstoff (4), der die innere Schicht beschichtet, die äußere Schicht (2) und der permanente Klebstoff (3), der die innere Schicht (1) und die äußere Schicht (2) verbindet, transparent sind.

3. - Zweischichtfolie nach einem der Ansprüche 1 oder 2, **dadurch gekennzeichnet, dass** die innere Schicht (1) aus Polyethylen eine Dicke von 50 bis 150 µm hat.

4. - Zweischichtfolie nach einem der Ansprüche 2 oder 3, **dadurch gekennzeichnet, dass** die innere Schicht (1) aus Polyethylen aufweist :
- eine Transparenz von 50 - 100 %, insbesondere 80 %, bei Raumtemperatur gemäß ISO 13468; und
- ein Schleier von 0 - 5 %, insbesondere 1,4 %, gemäß der Norm ISO 13468.

5. - Zweischichtige Folie nach einem der Ansprüche 1 bis 4, **dadurch gekennzeichnet, dass** der Klebstoff (4), der die innere Schicht beschichtet, ein Klebstoff ist, der das Ablösen der zweischichtigen Folie ermöglicht, wenn sie einmal auf einen Bildschirm gelegt wurde, und dann eine Neupositionierung der zweischichtigen Folie, wobei der repositionierbare Klebstoff (4) insbesondere ein Silikonklebstoff mit Benetzungseffekt ist.

6. - Zweischichtfolie nach einem der Ansprüche 1 bis 5, **dadurch gekennzeichnet, dass** die äußere Schicht (2) eine Dicke von 50 bis 200 µm hat.

7. - Zweischichtfolie nach einem der Ansprüche 1 bis 5, **dadurch gekennzeichnet, dass** die äußere Schicht (2) aus Polyvinylchlorid (PVC) oder Polyurethan besteht, das insbesondere mindestens einen der folgenden Stoffe aufweist: :
- eine Zugfestigkeit, ausgedrückt in N/25 mm, von mindestens 10, gemäß der Norm NF EN 14410;
- eine Bruchdehnung von 100 % bis 500 % , gemäß der Norm NF EN 14410 ;
- eine Schrumpfung nach 160 Stunden bei 70°C von 0 bis 1 mm, berechnet an einem Folienmuster von 10 cm x 10 cm.

8. - Zweischichtfolie nach einem der Ansprüche 1 bis 7, **dadurch gekennzeichnet, dass** die äußere Schicht (2) mindestens ein antimikrobielles Mittel insbesondere in einer Menge von 0,001 bis 1 Gew.-% enthält, wobei das oder die antimikrobiellen Mittel insbesondere aus Silber-, Gold-, Kupfer- oder Zinkpartikeln, Silber-, Gold-, Kupfer- oder Zinksalzen, chemischen antiseptischen oder antibiotischen Molekülen und natürlichen antiinfektiösen Wirkstoffen ausgewählt sind.

9. - Zweischichtfolie nach einem der Ansprüche 1 bis 8, **dadurch gekennzeichnet, dass** der permanente Klebstoff (3), der die innere Schicht und die äußere Schicht verbindet, ein permanenter Acrylklebstoff auf Lösungsmittelbasis ist, der insbesondere eine Dicke von 5 bis 20 µm hat.

10. - Verfahren zur Herstellung der zweischichtigen Folie, wie in einem der Ansprüche 1 bis 9 definiert, **dadurch gekennzeichnet, dass** man eine Co-Laminierung der inneren Schicht (1) und der äußeren Schicht (2) durchführt, die mit dem Klebstoff (3) beschichtet ist, der die Verbindung zwischen der inneren Schicht (1) und der äußeren Schicht (2) sicherstellen soll.

## Claims

1. - Bilayer film for touch screen protection, comprising:
- a first layer (1), called "inner layer", which is capable of being applied to the screen to be protected in the position of use, and whose inner face is coated with an adhesive (4) enabling the bilayer film to be bonded to said screen; and
- a second layer (2), called "outer layer", which is capable of being applied to the outer face of the inner layer by means of a permanent adhesive (3) and whose outer face is intended to face the user of said screen in the position of use,
**characterized by** the fact that :
- the inner layer (1) is a hard, screen-protecting layer made of polyethylene; and
- the outer layer (2) is a flexible, shock-absorbing and optionally anti-scratch layer made of a material selected from polyvinyl chloride and polyurethane,
wherein the adhesive (4) coating the inner layer can be protected before use by a peelable release sheet, and the outer face of the outer layer can be protected before use by a peelable protective sheet.

2. - Bilayer film according to claim 1, **characterized by** the fact that the inner layer (1), the adhesive (4) coating the inner layer, the outer layer (2) and the permanent adhesive (3) bonding the inner layer (1) and the outer layer (2) are transparent.

3. - Bilayer film according to one of claims 1 and 2, **characterized by** the fact that the inner layer (1) of polyethylene has a thickness of 50 to 150 µm.

4. - Bilayer film according to one of claims 2 and 3, **characterized by** the fact that the inner layer (1) of polyethylene has :
- a transparency of 50 - 100%, in particular 80%, at room temperature, according to ISO 13468 standard; and
- a haze of 0 - 5%, in particular 1.4%, according to ISO 13468 standard.

5. - Bilayer film according to one of claims 1 to 4, **characterized by** the fact that the adhesive (4) coating the inner layer is an adhesive enabling the debonding of the bilayer film once it has been applied to a screen, followed by repositioning of said bilayer film, said repositionable adhesive (4) being in particular a silicone adhesive with a wetting effect.

6. - Bilayer film according to one of claims 1 to 5, **characterized by** the fact that the outer layer (2) has a thickness of 50 to 200 µm.

7. - Bilayer film according to one of claims 1 to 5, **characterized by** the fact that the outer layer (2) is made of polyvinyl chloride (PVC) or polyurethane having in particular at least one of:
- a tensile strength, expressed in N/25 mm, of at least 10, in accordance with NF EN 14410 standard;
- an elongation at break of 100% to 500%, in accordance with NF EN 14410 standard;
- shrinkage after 160 hours at 70°C of 0 to 1 mm, calculated on a 10cm x 10cm film sample.

8. - Bilayer film according to any one of claims 1 to 7, **characterized by** the fact that the outer layer (2) contains at least one anti-microbial agent in an amount of, in particular, 0.001 to 1% by weight, said anti-microbial agents being, in particular, selected from silver, gold, copper or zinc particles, silver, gold, copper or zinc salts, antiseptic or antibiotic chemical molecules and natural anti-infectious agents.

9. - Bilayer film according to one of claims 1 to 8, **characterized by** the fact that the permanent adhesive (3) connecting the inner layer and the outer layer is a solvent-based acrylic permanent adhesive, in particular with a thickness of 5 to 20 µm.

10. - Method for manufacturing the bilayer film as defined in one of claims 1 to 9, **characterized by** the fact that the inner layer (1) and the outer layer (2) coated with the adhesive (3) for bonding the inner layer (1) to the outer layer (2) are co-laminated.
